# EUROPEAN PATENT SPECIFICATION

(11) **EP 3 907 711 B1**
(45) Date of publication and mention of the grant of the patent: **14.10.2026**
(21) Application number: 20382379.4
(22) Date of filing: 08.05.2020
(51) Int. Cl.: G08B 13/00, G08B 17/00, G08B 25/14

(54) **METHOD OF CONFIGURING AN ALARM SYSTEM COMPONENT**
VERFAHREN ZUM KONFIGURIEREN EINER ALARMSYSTEMKOMPONENTE
PROCÉDÉ DE CONFIGURATION D'UN COMPOSANT DE SYSTÈME D'ALARME

(43) Date of publication of application: 10.11.2021
(73) Proprietor: Carrier Corporation, Palm Beach Gardens, FL 33418 (US)
(72) Inventor: MOIX OLIVÉ, Pere, 08950 Esplugues de Llobregat, Barcelona (ES)
(74) Representative: Dehns

(56) References cited:
- EP-A1- 2 650 820
- JP-A- 2016 062 371
- JP-A- 2019 036 354
- US-A- 5 974 312
- US-A1- 2007 211 461
- US-A1- 2015 296 598
- US-A1- 2016 078 748

## Description

The present disclosure relates to a method of configuring a component for an alarm system.

An alarm system, such as a fire alarm system or an intrusion alarm system, comprises a number of components working in unison to detect and raise an alarm in the event of a change in a monitored environmental parameter. A typical alarm system comprises a plurality of component devices, such as detectors, manual call points and notification appliances, which are connected to form a robust infrastructure that is managed centrally from a control panel.

Manufacturers of components for use in alarm system will often design components that are interoperable with multiple different alarm systems. However, end users prefer to receive a pre-configured component that can be connected directly to the control panel of their alarm system without the need for configuration on site. Consequently, components for alarm systems are typically supplied in a pre-configured form.

In order to supply pre-configured components, the end user will specify a number of configuration parameters for the product at the time of order. This may include a communications protocol to be used, for example determined by the manufacturer of the control panel, details of the environment where the component is to be deployed, the country where the component is to be deployed, and the like. However, this results in a significant number of possible variants for each component meaning that components cannot be stockpiled by the component manufacturer and must instead be produced and configured after an order has been made.

It has been proposed to stockpile a basic pre-configuration component and to then configure the component after the configuration parameters are received. However, this is a complex process as each component must be recovered from storage, individually powered on, programmed and then packaged for delivery to the end user.

A need therefore exists for an improved alarm system component.

JP 2019 036354 A discloses a fire detector comprising a wireless tag for receiving a wireless communication from a portable setting device, which can write predetermined setting information to the wireless tag including the physical address of the fire detector or the sensitivity of the fire detector.

JP 2016 062371 A discloses a fire monitoring system comprising at least one wireless sensor and at least one receiving repeater, wherein, in order to communicate, the wireless sensor and the receiving repeater need to be set to use the same channel frequency. A wireless tag is included in each of the receiving repeaters and wireless sensors, and a portable setting device is provided for setting the communication channel frequency of a receiving repeater and the associated wireless sensors.

EP 2650820 A1 discloses a method and system for reading and writing operational parameters to and from an RFID tag included in a controlled device, such that the controlled device adapts its behaviour based on the operational parameters.

US 2007/211461 A1 discloses a lighting device comprising one or more light sources, a controller, a battery and a transceiver. The controller is configured to control operation of the lighting device by receiving current from a power source and to individually control current delivery to each of the light sources, and can be pre-programmed with a number of different operating modes/operating parameters and may switch back and forth between these in response to wireless signals (e.g. an emergency alert signal received from an alarm system).

US 2015/296598 A1 discloses a wireless communication system and method for configuring a device, said device including a wireless interface circuit and an electronic control unit (ECU) device/electronic controller. A wireless programming device is able to communicate with the wireless interface circuit (e.g. according to a RFID protocol) and send one or more parameters relating to the operation of the lamp to the wireless interface circuit, which may be read by the ECU device during subsequent operation/initial set up of the lamp.

US 5974312 A1 discloses an automated and wireless method for loading data into electronic devices which have a wireless interface, the method involving using an RF unit to establish wireless communication paths with a wireless communication interface of one or more electronic devices when the wireless programmer is operating within range of the electronic device(s).

The present invention provides a method of configuring a component for an alarm system as claimed in claim 1.

The described component may advantageously be configured after assembly to operate in accordance with the one or more configuration parameters. The configuration parameters may define which protocols the component should implement or follow during operation. For example, a manufacturer may only require one production line to produce each component, which can then be customised to operate in accordance with any number and combination of configuration parameters depending on the end user's system requirements.

Providing an offline configuration module enables the component to wirelessly receive and store an indication of the at least one configuration parameter, so that the configuration can occur while the component is not installed in the alarm system and/or connected to power. In some implementations, it is envisaged that this might be performed after packaging and/or storage of the component. This allows a non-configured component to be stockpiled and then straightforwardly and efficiently configured once the required configuration parameters, which may include at least one protocol, are received.

The offline configuration module is configured to use radio-frequency (RF) communication, and may comprise an RFID tag. Preferably, the offline communication module comprises a passive RFID tag. That is to say, the RFID tag may be configured to draw power from an RF excitation field to power the RFID tag. The use of a passive RFID tag advantageously means that it is not necessary to include a battery. RFID tags including batteries have a limited shelf-life and are larger and more expensive than passive RFID tags.

Furthermore, RFID readers do not require line-of-sight in order to interact with tags which can increase speed and efficiency of the configuration. For example, the use of RFID may allow for a fully packaged product to be configured, which was not previously possible.

The offline configuration module may be an active or semi-passive RFID tag, and may comprise a battery. That is to say, the RFID tag may be configured to draw power from an internal battery for RF communication over increased distances relative to a passive RFID tag. However, more preferably, the RFID tag is a passive RFID tag.

The offline configuration module may comprise a memory, wherein the indication of at least one configuration parameter is stored. The memory may be electrically erasable, programmable, read-only memory (EEPROM). The configuration memory may be read-write or write-once, read-many (WORM).

The component controller is configured to, upon initialisation of the component, acquire the indication of at least one configuration parameter from the offline configuration module. The component may initialise upon connection to a power source. Initialisation of the component may comprise the installation within an alarm system and subsequent activation and start-up procedure of the component controller. The component controller acquiring the indication of at least one configuration parameter from the offline configuration module upon initialisation provides a more robust automated system.

The component controller comprises a memory, wherein a plurality of protocols are stored.

The component controller is configured to, in response to the indication of the at least one configuration parameter, activate one or more protocols out of the plurality of protocols stored in the component memory. Thus, the component controller is configured to operate in accordance with at least one of the plurality of protocols based on the indication of the at least one configuration parameter. Storing the plurality of protocols in the component memory, and only storing a flag/indication of the at least one configuration parameter (which may define which protocol(s) are to be activated) in the configuration memory, allows the component to be configured quickly as only a small amount of data needs to be transmitted to the offline configuration module.

The component is configured in a configuration zone. A configuration zone comprises an environment the component can be brought into to be configured. In other words, a wireless signal containing an indication of the at least one configuration parameter is transmitted to each component brought into the configuration zone. RFID readers do not require line-of-sight in order to interact with tags, such that a configuration zone can be arranged. Thus multiple components can be configured simultaneously when brought into a configuration zone, which increases the speed and efficiency of the configuration. In particular, the multiple components may be configured using the same configuration parameters. For example, a single wireless signal may be broadcast to all components within the configuration zone, or individual wireless signals containing the same configuration parameters may be transmitted to each component within the configuration zone.

The plurality of protocols include communication protocols, and may also include operational protocols. Communication protocols define the rules and synchronisation of communication between two or more components in a communications system such as an alarm system. Operational protocols direct and control the standard operation and maintenance modes of the component. This may include ensuring the component is compliant with one or more industry and/or national standards. The plurality of protocols may also include management procedures that handle the processes and practices of the component and the alarm system.

The alarm system may be a fire alarm system.

The component may be an initiating component, which may be a fire detection component, such as a heat detector or a smoke detector, or which may be a manual call point.

The component may be a fire alarm control panel, preferably an addressable fire alarm control panel.

The component may be a fire suppression component such as a sprinkler system or fire door holder.

The component may be a fire notification component, such as a visual or audible fire alarm, or voice evacuation system.

The alarm system may be an intrusion alarm system.

The component may be an infrared or motion sensor.

The storing of the indication of the at least one configuration parameter may comprise storing the indication of the at least one configuration parameter in a memory of the offline configuration module.

The method of configuring the component for an alarm system may be performed by a customer after purchase.

The method of configuring the component for an alarm system may be performed by a manufacturer, and may be performed after production of the physical component and/or after the component has been packaged.

A preferred embodiment will now be described in greater detail, by way of example only and with reference to the drawings, in which:
Figure 1 shows a schematic illustration of a fire alarm system; and
Figure 2 shows a schematic illustration of a configurable smoke detector for use in the fire alarm system of Figure 1.

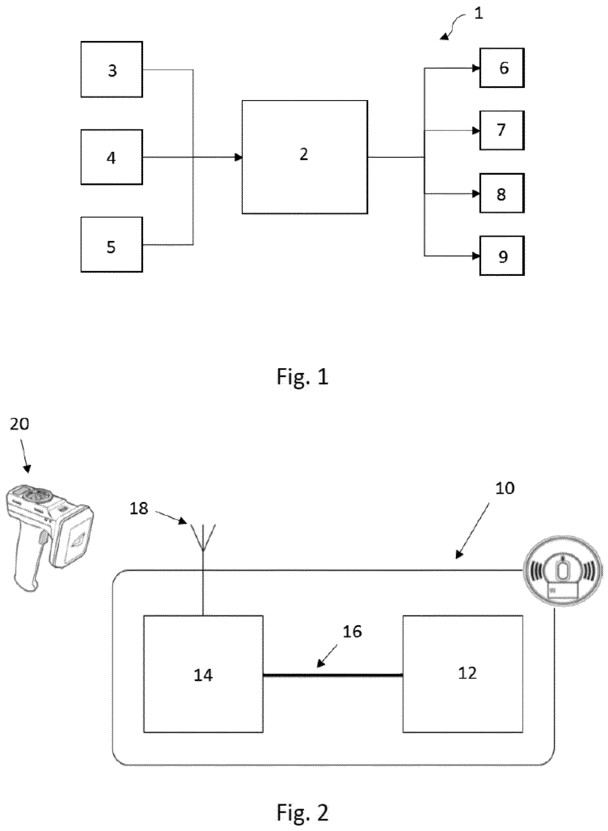

Figure 1 shows a fire alarm system 1.

The fire alarm system 1 comprises a fire alarm control panel 2 that monitors inputs from a plurality of initiating components, processes data from the initiating components, and controls notification components and/or fire suppression systems.

The initiating components of the fire alarm system 1 include components that are automatically actuated, such as smoke detector 3 and heat detector 4, as well as manually actuated components, such as manual call point 5.

The notification components of the fire alarm system 1 include a visual fire alarm 6 and an audible fire alarm 7. The fire suppression systems of the fire alarm system 1 include a sprinkler system 8 and a fire door holder system 9.

The fire alarm system 1 exchanges information with all of the components comprised in its network through wired or wireless communication. The 'language' of the communication between the component parts of the network, referred to as the communication protocol, defines the system of rules, syntax, semantics and synchronisation that each component must follow in order to receive and transmit information compatibly within the fire alarm system 1. A single communication could be subject to the rules and conventions set out by multiple communication protocols. The communication protocol is typically defined by the manufacturer of the fire alarm control panel 2.

If any of the components of the fire alarm system 1 break or become faulty, it may become necessary to replace them. However, because the fire alarm system 1 communicates via a particular communication protocol, a replacement part must also communicate via this particular communication protocol. There are a large number of communication protocols, as well as operational protocols and other associated configuration parameters. It would be beneficial to provide a component that could be configured post-assembly in order to operate according to protocols selected by a manufacturer or user.

Advantageously, a non-configured component can be mass produced via a single production line and stockpiled in a storage warehouse. Such a component can then be configured, at the time of order, according to a plurality of configuration parameters specified by the requirements of the fire alarm system 1 of an end user.

Whilst the fire alarm system 1 is illustrated as comprising a particular configuration of initiating devices and notification devices, the techniques described herein are applicable to fire alarm systems 1 comprising only some of these components and/or including additional components not discussed explicitly herein.

Figure 2 shows a configurable smoke detector 10 for use in the fire alarm system 1.

The smoke detector 10 comprises a component controller 12. The controller 12 could be any microcontroller or processor suitable for controlling the smoke detector 10 during normal operation, i.e. after the smoke detector 10 has been initialised in a fire alarm system 1.

The component controller 12 is configured to operate the smoke detector 10 during normal operation, for example, detecting an increase in smoke levels, determining that the smoke levels exceed a predetermined threshold value, and communicating to fire alarm control panel 2 via a network that the smoke levels have exceeded the threshold value.

The smoke detector 10 also comprises an offline configuration module 14. The offline configuration module 14 of the smoke detector 10 is a RFID tag and comprises an antenna 18 for receiving and transmitting wireless signals. The RFID tag 14 is a passive RFID tag and therefore does not include an internal battery. That is to say, the antenna 18 can draw power from an RF (radio frequency) excitation field to power the operation of the RFID tag 14. Therefore, the offline configuration module 14 can still operate even when power is not being supplied to the component controller 12.

The component controller 12 is configured to internally communicate with the offline configuration module 14 through a digital interface 16.

During manufacture of the smoke detector 10, the component controller 12 is programmed to operate in accordance with any of a plurality of configuration parameters, comprising communication and operational protocols, and the like. Thus, the relevant protocols and the like may be programmed into a memory (not shown) of the component controller 12 during manufacture, but the controller 12 is not initially configured to implement the protocols.

Instead the component controller 12 is configured to, upon initialisation, acquire from the offline configuration module 14 a stored indication of at least one configuration parameter, which defines what protocol(s) the controller 12 should implement.

The smoke detector 10 begins an initialisation procedure upon supply of power to the component controller 12, which typically occurs following installation in the fire alarm system 1. Initialisation of the smoke detector 10 comprises the subsequent activation and start-up procedure of the component controller 12.

After initialisation, the component controller 12 implements operational protocols for the smoke detector 10. For example, a predetermined threshold value may be set by industry or national safety standards, which can be configured using the offline configuration module 14. The component controller 12 also follows a communication protocol(s) of the fire alarm system 1 when communicating with the fire alarm control panel 2, which is(are) configured using the offline configuration module 14.

A method of configuring the smoke detector 10 for use in the fire alarm system 1 is now described.

A selection of configuration parameters are input into an RF transceiver 20. The configuration parameters may, for example, be determined based on an end user's specification when ordering a particular component. The end user specifies a device for use with a particular fire control panel 2, and the configuration parameters define the communication protocol corresponding to that fire control panel 2. Likewise, the end user may specify a device for use in a specific country and in a particular environment, and the configuration parameter may define the corresponding smoke detection sensitivity thresholds for that environment under the regulations of that country.

The RF transceiver 20 then generates a wireless signal containing an indication of the configuration parameters that the smoke detector 10 is to use.

The RF transceiver 20 generates an RF excitation field around itself within which a non-configured component will be configured in accordance with the configuration parameters. This area is described as a configuration zone.

Upon the offline configuration module 14 being brought into a configuration zone, the RFID tag of the offline configuration module 14 will be energised. The antenna 18 of the offline configuration module 14 harvests power from the excitation field for the operation of the offline configuration module 14 and receives the wireless signal. The offline configuration module 14 stores the indication of the at least one protocol contained within the wireless signal. Optionally, the offline configuration module 14 may then transmit via antenna 18 a confirmation to the transceiver 20 that the indication of the at least one protocol has been stored.

Upon subsequent initialisation of the configured smoke detector 10, as described above, the controller 12 queries the offline configuration module 14 to acquire the stored indication of the at least one configuration parameter. Once the controller 12 has acquired the stored indication of the at least one configuration parameter, the controller 12 operates in accordance with the at least one protocol as designated by the stored indication.

The configuration of the smoke detector 10 can occur at any point between production and initialisation of the smoke detector 10. The configuration can be carried out by a manufacturer. This can include configuring the smoke detector 10 after the smoke detector 10 has been packaged and stored in a warehouse.

The smoke detector 10 can be configured by an end user prior to initialisation of the smoke detector 10 within fire alarm system 1.

Advantageously, the use of an RFID tag within the offline configuration module 14 means that the smoke detector 10 does not need to be physically connected, for example to a computer and/or power source. This means that the smoke detector 10 can be configured after packaging, allowing configuration to be performed after manufacture has been completed, or indeed after the smoke detector 10 has left the factory.

Furthermore, the use of RFID allows multiple smoke detectors 10 to be quickly configured in accordance with the same configuration parameters. By using a sufficiently powerful transceiver 20 to establish the configuration zone, an entire pallet of packaged smoke detectors 10 is placed within the configuration zone, whereby each smoke detector 10 will receive the same indication of configuration parameters at the same time.

In some embodiments, the smoke detector 10 may be configured to undergo one and only one configuration process, i.e. the indication of the at least one configuration parameter is permanently stored in the offline configuration module 14 and cannot be overwritten in the event the offline configuration module 14 receives any subsequent wireless signals containing further indications of configuration parameters.

Alternatively the smoke detector 10 could be configured more than once, wherein the previously stored indication is written over in response to receiving a subsequent wireless signal containing a new indication of at least one configuration parameter. For example, smoke detector 10 could be brought into a configuration zone by accident and receive an incorrect indication of at least one configuration parameter. The smoke detector 10 can then be reconfigured according to the original method as discussed above.

The techniques discussed herein are applicable to any component of a fire alarm system 1, such as the fire alarm control panel 2 or any of the initiating devices or notification devices described above. Furthermore, whilst the techniques disclosed herein have been described in the context of a fire alarm system 1, they may be employed in components for other alarm systems, such as an intrusion alarm system.

## Claims

1. A method of configuring a component (2, 3, 4, 5, 6, 7, 8, 9, 10) for an alarm system (1), wherein the component comprises a component controller (12) and an offline configuration module (14), the component controller comprising a memory storing a plurality of communication protocols, the method comprising:
establishing, using a radio-frequency transceiver (20), a configuration zone, wherein a wireless transmission containing an indication of at least one configuration parameter is transmitted to each component brought into the configuration zone;
bringing the component into the configuration zone, wherein the component is one of a plurality of components (2, 3, 4, 5, 6, 7, 8, 9, 10) brought into the configuration zone simultaneously;
receiving, by the offline configuration module of the component, wireless transmission of the indication of the at least one configuration parameter; and
storing, by the offline configuration module, the indication of the at least one configuration parameter,
wherein the component controller of the component is configured to, upon initialisation of the component:
acquire the indication of the at least one configuration parameter from the offline configuration module; and, in response to acquiring the indication of the at least one configuration parameter,
activate one or more communication protocols of the plurality of communication protocols as indicated by the at least one configuration parameter.

2. A method according to claim 1, wherein the method is performed after production of the physical component (2, 3, 4, 5, 6, 7, 8, 9, 10) has been completed.

3. A method according to any preceding claim, wherein the method is performed after the component (2, 3, 4, 5, 6, 7, 8, 9, 10) has been packaged.

4. A method according to any preceding claim, wherein the alarm system is a fire alarm system and the component is one of: a heat detector, a smoke detector, a manual call point, a fire alarm control panel, a sprinkler system, a fire door holder, a visual or audible fire alarm, and a voice evacuation system.

5. A method according to claim 4, wherein the component is a replacement component for a fire alarm system that communicates via at least one particular communication protocol, and wherein the indication of the at least one configuration parameter corresponds to the at least one particular communication protocol.

6. A method according to any of claims 1 to 3, wherein the alarm system is an intrusion alarm system and the component is one of: an infrared sensor and a motion sensor.

## Patentansprüche

1. Verfahren zum Konfigurieren einer Komponente (2, 3, 4, 5, 6, 7, 8, 9, 10) für ein Alarmsystem (1), wobei die Komponente eine Komponentensteuereinheit (12) und ein Offline-Konfigurationsmodul (14) umfasst, wobei die Komponentensteuereinheit einen Speicher umfasst, der eine Vielzahl von Kommunikationsprotokollen speichert, wobei das Verfahren Folgendes umfasst:
Herstellen einer Konfigurationszone unter Verwendung eines Hochfrequenz-Sendeempfängers (20), wobei eine drahtlose Übertragung, die eine Angabe von mindestens einem Konfigurationsparameter enthält, an jede Komponente übertragen wird, die in die Konfigurationszone gebracht wird;
Bringen der Komponente in die Konfigurationszone, wobei die Komponente eine von einer Vielzahl von Komponenten (2, 3, 4, 5, 6, 7, 8, 9, 10) ist, die gleichzeitig in die Konfigurationszone gebracht werden;
Empfangen von drahtloser Übertragung der Angabe des mindestens einen Konfigurationsparameters durch das Offline-Konfigurationsmodul der Komponente; und Speichern der Angabe des mindestens einen Konfigurationsparameters durch das Offline-Konfigurationsmodul,
wobei die Komponentensteuereinheit der Komponente so konfiguriert ist, dass sie bei Initialisierung der Komponente:
die Angabe des mindestens einen Konfigurationsparameters von dem Offline-Konfigurationsmodul erfasst; und als Reaktion auf Erfassens der Angabe des mindestens einen Konfigurationsparameters ein oder mehrere Kommunikationsprotokolle der Vielzahl von Kommunikationsprotokollen so aktiviert, wie von dem mindestens einen Konfigurationsparameter angegeben.

2. Verfahren nach Anspruch 1, wobei das Verfahren durchgeführt wird, nachdem Herstellung der physischen Komponente (2, 3, 4, 5, 6, 7, 8, 9, 10) abgeschlossen ist.

3. Verfahren nach einem vorstehenden Anspruch, wobei das Verfahren durchgeführt wird, nachdem die Komponente (2, 3, 4, 5, 6, 7, 8, 9, 10) verpackt wurde.

4. Verfahren nach einem vorstehenden Anspruch, wobei das Alarmsystem ein Feueralarmsystem ist und die Komponente eines ist von: einem Wärmemelder, einem Rauchmelder, einem Handfeuermelder, einer Brandmeldetafel, einem Sprinklersystem, einer Halterung für Brandschutztüren, einem visuellen oder hörbaren Feueralarm und einem Evakuierungssystem mit Sprache.

5. Verfahren nach Anspruch 4, wobei die Komponente eine Austauschkomponente für ein Feueralarmsystem ist, die über mindestens eines von einem konkreten elektronischen Kommunikationsprotokoll kommuniziert, und wobei die Angabe des mindestens einen Konfigurationsparameter dem mindestens einen konkreten Kommunikationsprotokoll entspricht.

6. Verfahren nach einem der Ansprüche 1 bis 3, wobei das Alarmsystem ein Einbruchalarmsystem ist und die Komponente eines ist von: einem Infrarotsensor und einem Bewegungsmelder.

## Revendications

1. Procédé de configuration d'un composant (2, 3, 4, 5, 6, 7, 8, 9, 10) pour un système d'alarme (1), dans lequel le composant comprend un dispositif de commande (12) de composant et un module de configuration hors ligne (14), le dispositif de commande de composant comprenant une mémoire stockant une pluralité de protocoles de communication, le procédé comprenant :
l'établissement, en utilisant un émetteur-récepteur radiofréquence (20), d'une zone de configuration, dans lequel une transmission sans fil contenant une indication d'au moins un paramètre de configuration est transmise à chaque composant amené dans la zone de configuration ;
le fait d'amener le composant dans la zone de configuration, dans lequel le composant est l'un parmi une pluralité de composants (2, 3, 4, 5, 6, 7, 8, 9, 10) amenés simultanément dans la zone de configuration ;
la réception, par le module de configuration hors ligne du composant, d'une transmission sans fil de l'indication de l'au moins un paramètre de configuration ; et
le stockage, par le module de configuration hors ligne, de l'indication de l'au moins un paramètre de configuration,
dans lequel le dispositif de commande de composant du composant est configuré pour, lors de l'initialisation du composant :
acquérir l'indication de l'au moins un paramètre de configuration à partir du module de configuration hors ligne ; et, en réponse à l'acquisition de l'indication de l'au moins un paramètre de configuration,
activer un ou plusieurs protocoles de communication de la pluralité de protocoles de communication comme indiqué par l'au moins un paramètre de configuration.

2. Procédé selon la revendication 1, dans lequel le procédé est mis en œuvre une fois la production du composant physique (2, 3, 4, 5, 6, 7, 8, 9, 10) finie.

3. Procédé selon une quelconque revendication précédente, dans lequel le procédé est mis en œuvre après la mise en boîtier du composant (2, 3, 4, 5, 6, 7, 8, 9, 10).

4. Procédé selon une quelconque revendication précédente, dans lequel le système d'alarme est un système d'alarme incendie et le composant est l'un parmi : un détecteur de chaleur, un détecteur de fumée, un déclencheur manuel d'alarme, un tableau de commande d'alarme incendie, un système d'extinction automatique, un arrêt de porte coupe-feu, une alarme incendie visuelle ou sonore et un système d'évacuation vocale.

5. Procédé selon la revendication 4, dans lequel le composant est un composant de remplacement pour un système d'alarme incendie qui communique via au moins un protocole de communication E particulier, et dans lequel l'indication de l'au moins un paramètre de configuration correspond à l'au moins un protocole de communication particulier.

6. Procédé selon l'une quelconque des revendications 1 à 3, dans lequel le système d'alarme est un système d'alarme anti-intrusion et le composant est l'un parmi : un capteur infrarouge et un capteur de mouvement.
